Europäisches Patentamt

European Patent Office

Office européen des brevets

(19)

(11) EP 1 253 737 A1

(12) ## EUROPEAN PATENT APPLICATION

(43) Date of publication:
**30.10.2002 Bulletin 2002/44**

(51) Int Cl.7: **H04L 1/24, H04B 17/00**

(21) Application number: **01110327.2**

(22) Date of filing: **26.04.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Rohde & Schwarz GmbH & Co. KG**<br>**D-81671 München (DE)**<br><br>(72) Inventors:<br>• **Maucksch, Thomas**<br>**83104 Tuntenhausen (DE)** | • **Bäder, Uwe**<br>**55545 Bad Kreuznach (DE)**<br><br>(74) Representative: **Körfer, Thomas, Dipl.-Phys. et al**<br>**Mitscherlich & Partner,**<br>**Patent- und Rechtsanwälte,**<br>**Sonnenstrasse 33**<br>**80331 München (DE)** |

(54) **Method for testing the bit error ratio of a device**

(57) A method for testing the Bit Error Ratio BER of a device against a maximal allowable Bit Error Ratio $BER_{limit}$ with an early pass and/or early fail criterion, whereby the early pass and/or early fail criterion is allowed to be wrong only by a small probability D. ns bits of the output of the device are measured, thereby ne erroneous bits of these ns bits are detected. $PD_{high}$ and/or $PD_{low}$ are obtained, whereby $PD_{high}$ is the worst possible likelihood distribution and $PD_{low}$ is the best possible likelihood distribution containing the measured ne erroneous bits with the probability D. The average numbers of erroneous bits $NE_{high}$ and $NE_{low}$ for $PD_{high}$ and $PD_{low}$ are obtained. $NE_{high}$ and $NE_{low}$ are compared with $NE_{limit} = BER_{limit} \cdot ns$. If $NE_{limit}$ is higher than $NE_{high}$ or $NE_{limit}$ is lower than $NE_{low}$ the test is stopped.

BER limit = 0.2 (1/5)   Actual BER = 0.25 (1/4)

| Number of sample, | 1 | 2 | 3 | 4 | 5 | 6 | 7 | 8 | 9 | 10 etc... |
|---|---|---|---|---|---|---|---|---|---|---|
| Sequence, 0: correct, 1: error | 0 | 1 | 0 | 0 | 0 | 1 | 0 | 0 | 0 | 1 |
| BER | | 1/2 | 1/3 | 1/4 | 1/5 | 2/6 | 2/7 | 2/8 | 2/9 | 3/10 |
| BER norm | | 5/2 | 5/3 | 5/4 | 5/5 | 10/6 | 10/7 | 10/8 | 10/9 | 15/10 |

Fig. 3

EP 1 253 737 A1

**Description**

The application is related to testing the Bit Error Ratio of a device, such as a digital receiver for mobile phones.

Testing digital receivers is two fold: The receiver is offered a signal, usually accompanied with certain stress conditions. The receiver has to demodulate and to decode this signal. Due to stress conditions the result can be partly erroneous. The ratio of erroneously demodulated to correctly demodulated bits is measured in the Bit Error Ratio (BER) test. The BER test is subject of this application.

BER testing is time consuming. This is illustrated by the following example: a frequently used BER limit is 0.001. The bitrate frequently used for this test is approx. 10kbit/s. Due to statistical relevance it is not enough to observe 1 error in 1000 bits. It is usual to observe approx. 200 errors in 200 000 bits. This single BER test lasts 20 seconds. There are combined tests which contain this single BER test several times, e.g. the receiver blocking test. Within this test the single BER test is repeated 12750 times with different stress conditions. Total test time here is more than 70h. It is known in the state of the art to fail the DUT (Device Under Test) early only, when a fixed number of errors as 200 errors are observed before 200 000 bits are applied. (Numbers from the example above).

It is the object of the present application to propose a method for testing the Bit Error Ratio of a device with reduced test time, preserving the statistical relevance.

The object is solved by the features of claim 1 or claim 4.

According to the present invention, the worst possible likelihood distribution $PD_{high}$ and/or the best possible likelihood distribution $PD_{low}$ are obtained by the formulas given in claim 1 and 4, respectively. From these likelihood distributions, the average number $NE_{high}$ or $NE_{low}$ is obtained and compared with the limit $NE_{limit}$, respectively. If the limit $NE_{limit}$ is higher than the average number $NE_{high}$ or smaller than the average number $NE_{low}$, the test is stopped and it is decided that the device has early passed or early failed, respectively.

The dependent claims contain further developments of the invention.

The Poisson distribution preferably used for the present invention, is best adapted to the BER problem. The nature of the Bit Error occurrence is ideally described by the binomial distribution. This distribution, however, can only be handled for small number of bits and errors. For a high number of bits and a low Bit Error Ratio the binomial distribution is approximated by the Poisson distribution. This prerequisite (high number of bits, low BER) is ideally fulfilled for normal Bit Error Rate testing (BER limit 0.001) as long as the DUT is not totally broken (BER 0.5). The application proposes to overcome problems with the discrete nature of the Poisson distribution. With the same method an early pass condition as well as an early fail condition is derived.

An embodiment of the invention is described hereafter. In the drawings

Fig. 1    shows a diagram to illustrate the inventive method,

Fig. 2    shows the referenced Bit Error Ratio $ber_{norm}$ as a function of the measured errors ne and

Fig. 3    shows a diagram to illustrate a measurement using the inventive method.

In the following, the early fail condition and the early pass condition is derived with mathematical methods.

Due to the discrete nature of the Poisson distribution the early fail and the early stop conditions are not defined at the very beginning of the test. The application contains proposals, how to conduct the test at this undefined areas. The proposals are conservative (not risky). A DUT on the limit does not achieve any early stop condition. The application proposes to stop the test unconditioned at a specific number K (for example 200 bit) errors. It describes the worst case property of a DUT under this condition.

Based on a single measurement, a confidence range CR around this measurement is derived. It has the property that with high probability the final result can be found in this range.

The confidence range CR is compared with the specified BER limit. From the result a diagram is derived containing the early fail and the early pass condition.

As the diagram is not defined over the entire range, proposals are given how to conduct the test, where the diagram is undefined.

With a finite number of samples ns of measured bits, the final Bit Error Ratio BER cannot be determined exactly. Applying a finite number of samples ns, a number of errors ne is measured. ne/ns = ber is the preliminary Bit Error Ratio.

In a single test a finite number of measured bits ns is applied, and a number of errors ne is measured. ne is connected with a certain differential probability in the Poisson distribution. The probability and the position in the distribution conducting just one single test is not known.

Repeating this test infinite times, applying repeatedly the same ns, the complete Poisson distribution is obtained. The average number (mean value) of errors is NE. NE/ns is the final BER. The Poisson distribution has the variable ne and is characterised by the parameter NE, the average or mean value. Real probabilities to find ne between two limits are calculated by integrating between such limits. The width of the Poisson distribution increases proportional to SQR(NE), that means, it increases absolutely, but decreases relatively.

In a single test ns samples are applied and ne errors are measured. The result can be a member of different Poisson distributions each characterized by another parameter NE. Two of them are given as follows:

The worst possible distribution $NE_{high}$ , containing the measured ne with the probability $D_1$, is given by

$$D_1 \;=\; \int_0^{ne} PD_{high}(NE_{high}, ni)\, dni$$

$$(1)$$

In the example $D_1$ is 0.002=0.2% $PD_{high}$ is the wanted Poisson distribution with the variable ni. ne is the measured number of errors.

The best possible distributions $NE_{low}$, containing the measured ne with the probability $D_2$ is given by

$$D_2 \;=\; \int_{ne}^{\infty} PD_{low}(NE_{low}, ni)\, dni$$

$$(2)$$

In the example $D_2$ is equal $D_1$ and it is $D = D_1 = D_2 = 0.002 = 0.2\%$.

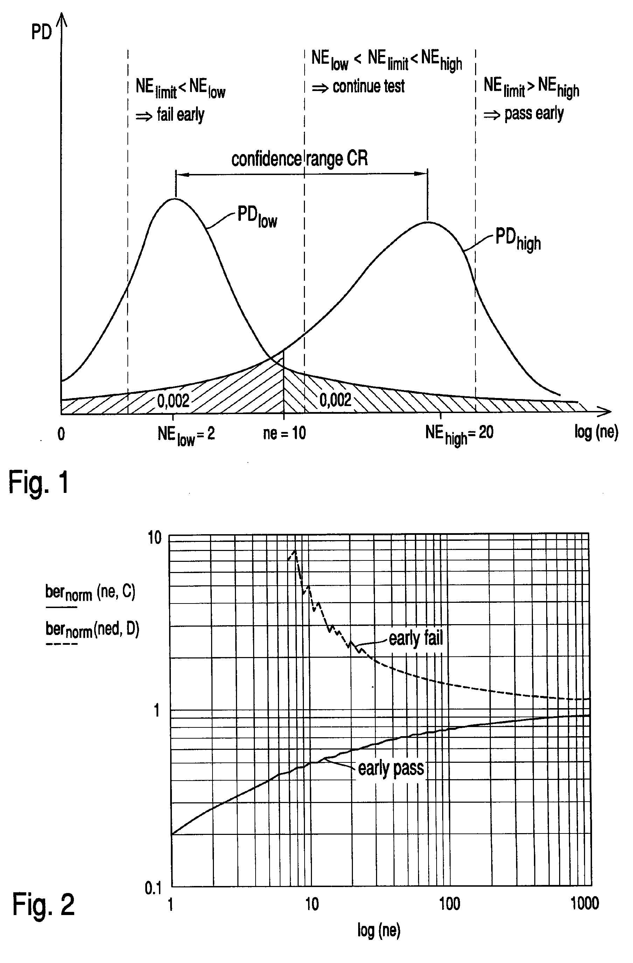

To illustrate the meaning of the range between $NE_{low}$ and $NE_{high}$ refer to Fig. 1. Fig. 1 shows the likelihood density PD as a function of the measured number of errors ne. In the example, the actual detected number of errors ne within the measured sample of ns bits is 10. The likelihood distribution of the errors is not known. The worst possible likelihood distribution $PD_{high}$ under all possible likelihood distributions as well as the best possible likelihood distribution $PD_{low}$ under all possible likelihood distributions are shown. The worst possible likelihood distribution $PD_{high}$ is characterized in that the integral from 0 to ne = 10 gives a total probability of $D_1 = 0.002$. The best possible likelihood distribution $PD_{low}$ is characterized in that the integral from ne = 10 to $\infty$ gives a total probability of $D_2 = 0.002$. In the preferred embodiment $D_1$ is equal to $D_2$, i.e. $D_1 = D_2 = 0.002 = 0.2\%$. After having obtained the likelihood distribution $PD_{high}$ and $PD_{low}$ from formulas (1) and (2), the average values or mean values $NE_{high}$ for the likelihood distribution $PD_{high}$ and $NE_{low}$ for the likelihood distribution $PD_{low}$ can be obtained. The range between the mean value $NE_{low}$ and $NE_{high}$ is the confidence range CR indicated in Fig. 1.

In the case the measured value ne is a rather untypical result (in the example just 0.2% probability) nevertheless the final result NE can still be found in this range, called confidence range CR.

The probabilities $D_1$ and $D_2$ in (1) and (2) can be independent, but preferable they are dependent and equal $(D = D_1 = D_2)$.

With the inverse cumulative Poisson distribution qpois(D,ne) $NE_{low}$ and $NE_{high}$ can be obtained. The inputs for the inverse cumulative Poisson distribution qpois(D,ne) are the number of errors ne, measured in this test and the probabilities D and C = 1- D. The Output of the inverse cumulative Poisson distribution qpois(D,ne) is NE, the parameter describing the average of the Poisson distribution.

The following example is illustrated in Fig. 1 $(D = D_1 = D_2)$ :

    Number of errors: ne=10
    Probability: D=0.002       C=0.998

Result:

$NE_{low}$ = qpois(D,ne) = 2
      $NE_{high}$ = qpois(C,ne) = 20

Interpretation:

Having measured ne=10 errors in a single test, then with a low probability D=0.002 the average number of errors NE in this test is outside the range from 2 to 20 or with a high probability C=0.998 inside this range from 2 to 20.

Such as the width of the Poisson distribution, the confidence range CR increases proportional to SQR(ne), that means, it increases absolutely, but decreases relatively.

If the entire confidence range CR, calculated from a single result ne, is found on the good side ($NE_{limit} > NE_{high}$) of the specified limit $NE_{limit}$ we can state: With high probability C, the final result NE is better than the limit $NE_{limit}$. Whereby $NE_{limit}$ is given by

$$NE_{limit} = BER_{limit} \cdot ns \qquad (4a)$$

and $BER_{limit}$ is the Bit Error Rate allowable for the device and obtained by an ideal long test with an infinite high number of bit samples ns.

If the entire confidence range CR, calculated from a single result ne, is found on the bad side ($NE_{limit} < NE_{low}$) of the specified limit $NE_{limit}$ we can state: With high probability C, the final result NE is worse than the limit.

With each new sample and/or error a new test is considered, reusing all former results. With each new test the preliminary data for ns, ne and ber is updated. For each new test the confidence range CR is calculated and checked against the test limit $NE_{limit}$.

Once the entire confidence range CR is found on the good side of the specified limit ($NE_{limit} > NE_{high}$), an early pass is allowed. Once the entire confidence range CR is found on the bad side of the specified limit ($NE_{limit} < NE_{low}$) an early fail is allowed. If the confidence range CR is found on both sides of the specified limit ($NE_{low} < NE_{limit} < NE_{high}$), it is evident neither to pass nor to fail the DUT early.

Fig. 1 illustrates the above conditions. Of course, $NE_{limit}$ is a fixed value not altering during the test, but $NE_{low}$ and $NE_{high}$ as well as the confidence range CR are altering during the test. For reasons of illustration, however, the three possibilities of the possible positions of the confidence range CR with respect to the constant limit $NE_{limit}$ are drawn for the same example in Fig. 1.

The above can be described by the following formulas:

The current number of samples ns is calculated from the preliminary Bit Error Ratio ber and the preliminary number of errors ne

$$ber = ne/ns \qquad (3)$$

After a full test the final Bit Error Ratio is

$$BER_{limit} = NE_{limit} / ns \qquad (4)$$

for abbreviation in the formula:

$$ber_{norm} = ber/BER_{limit} = ne/ NE_{limit}$$

$$(normalised\ ber) \qquad (5)$$

Early pass stipulates:

$$NE_{high} < NE_{limit} \qquad (6)$$

Early fail stipulates:

$$NE_{low} > NE_{limit} \qquad (7)$$

Formula for the early pass limit:

$$ber_{norm} = \frac{ne}{qpois(C,ne)} \qquad (8)$$

This is the lower curve in Fig. 2, which shows $ber_{norm}$ as a function of ne. The qpois-function gives the average number NE as a function of Poisson distribution.

Formula for the early fail limit:

$$ber_{norm} = \frac{ne}{qpois(D,ne)} \qquad (9)$$

This is the upper curve in Fig. 2.

As the early pass limit is not defined for ne = 0 (normally the case at the very beginning of the test for a good DUT), an artificial error event with the first sample can be introduced. When the first real error event occurs, the artificial error is replaced by this real one. This gives the shortest possible measurement time for an ideal good DUT. For example ns=5000 for $BER_{limit}$ =0.001 and probability $D = D_1 = D_2 = 0.2\%$.

As the early fail limit is not defined for small ne<k (in the example above k=7) due to singularities, the early fail limit at ne=k is extended with a vertical line upwards. This ensures that a broken DUT hits the early fail limit in any case after a few samples, approx. 15 in the example. In other words, the test is not stopped as long as ne is smaller than k.

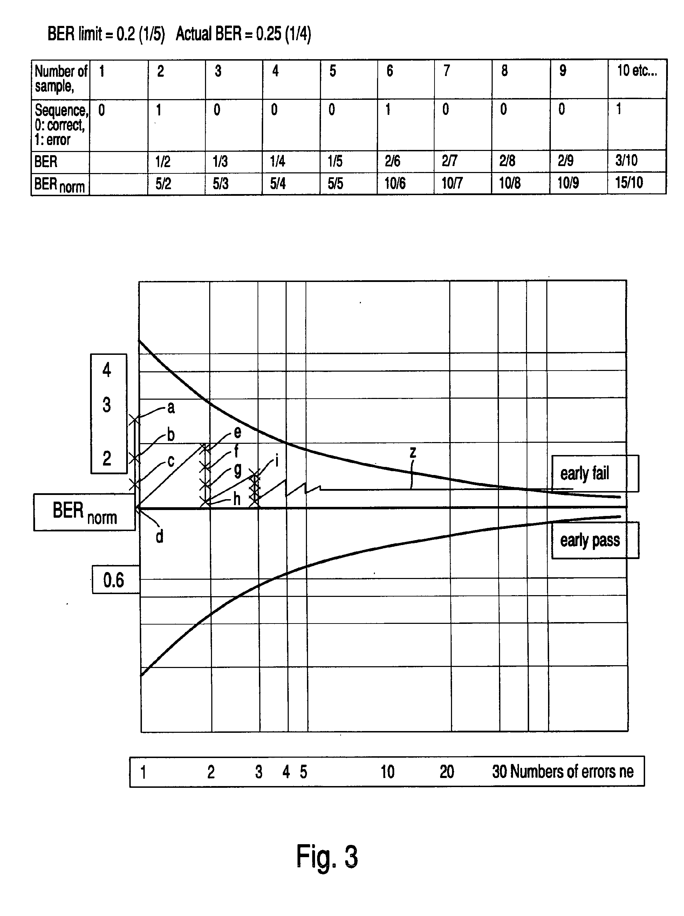

With each new sample and/or error a new test is considered, reusing all former results. With each new test the preliminary data for ns, ne and ber and $ber_{norm}$ are updated and a $ber_{norm}$/ne coordinate is entered into the $ber_{norm}$-diagram. This is shown in Fig. 3. Once the trajectory crosses the early fail limit ($ber_{norm}$ (ne,D)) or the early pass limit ($ber_{norm}$ (ne,C)) the test may be stopped and the conclusion of early fail or early pass may be drawn based on this instant.

Fig. 3 shows the curves for early fail and early pass. $ber_{norm}$ is shown as a function of the number of errors ne. For the simple example demonstrated in Fig. 3, it is $BER_{limit}$ = 0.2 = 1/5 and the final Bit Error Ratio BER = 0.25 (1/4). The test starts with the first bit sample, for which no error is detected. For the second sample, a first error is detected and the preliminary Bit Error Ratio ber = ne/ns = 1/2 and $ber_{norm}$ = ber/$BER_{limit}$ becomes 1/2 : 1/5 = 5/2. $ber_{norm}$ after the second sample is marked with a cross a in Fig. 3. For the third, fourth and fifth sample, no further error occurs and $ber_{norm}$ subsequently becomes 5/3, 5/4 and 5/5, respectively, which is marked with the crosses b, c and d in Fig. 3, respectively. The sixth sample brings a new error and ne becomes 2. Consequently, ber = ne/ns becomes 2/6 and $ber_{norm}$ becomes 10/6. This situation is marked with cross e in Fig. 3. For the seventh, eighth and ninth sample, no further error occurs and the situation after the seventh, eighth and ninth sample is marked with crosses f, g, h in Fig. 3, respectively. The tenth sample brings a third error. Consequently, ber becomes 3/10 and $ber_{norm}$ becomes 15/10. This situation is marked with cross i in Fig. 3. As can be seen from Fig. 3, the trajectory is between the early fail curve and the early pass curve at the beginning of the test, but converges to a line Z, which crosses the early fail curve after about forty errors. After forty errors, it can thus be decided that the tested DUT early fails the test.

If no early stop occurs the BER test may be stopped, after the following condition is valid:

$$ne >= K$$

and the DUT shall be passed, if ns is sufficiently high. K is a maximum number of errors. For example K can be 200.

If the trajectory neither crosses the early fail curve nor the early pass curve after K (for example 200) errors have occurred, the DUT can be finally passed. If the DUT, however, is rather good or rather bad, the tests can be stopped much earlier, long before the K = 200 errors have occurred. This significantly shortens the total test time.

The following gives a worst case interpretation of the example with C=0.998, ne=200 then $NE_{high}$ = 242 and $NE_{low}$ = 161. The relative distance of $NE_{high}$ and $NE_{low}$ is 50%. Such a DUT tested against BER 0.0015 (instead of 0.001) is passed and is bad with the same low probability 0.2%. At this point the longest possible measurement time can be calculated: ns=242000 for $BER_{limit}$ =0.001, probability 0.2% and K = 200.

With given $D_1$ and $D_2$ the early fail curve and the early pass curves in Fig. 2 and Fig. 3 can be calculated before the test is started. During the test only $ber_{norm}$ = ne/$NE_{limit}$ has to be calculated and to be compared with the early pass limit and the early fail limit as explained with respect to Fig. 3. Thus, no intensive calculation has to be done during the test.

**Claims**

1. Method for testing the Bit Error Ratio BER of a device against a maximal allowable Bit Error Ratio $BER_{limit}$ with an early pass criterion, whereby the early pass criterion is allowed to be wrong only by a small probability $D_1$, with the following steps

- measuring ns bits of the output of the device, thereby detecting ne erroneous bits of these ns bits,
- assuming that the likelihood distribution giving the distribution of the number of erroneous bits ni in a fixed number of samples of bits is PD(NE,ni), wherein NE is the average number of erroneous bits, obtaining $PD_{high}$ from

$$D_1 \quad = \quad \int_0^{ne} PD_{high}(NE_{high}, ni) dni$$

wherein $PD_{high}$ is the worst possible likelihood distribution containing the measured ne erroneous bits with the probability $D_1$,

- obtaining the average number of erroneous bits $NE_{high}$ for the worst possible likelihood distribution $PD_{high}$,
- comparing $NE_{high}$ with $NE_{limit} = BER_{limit}$ ns,
- if $NE_{limit}$ is higher than $NE_{high}$ stopping the test and deciding that the device has early passed the test and
- if $NE_{limit}$ is smaller than $NE_{high}$ continuing the test whereby increasing ns.

2.  Method for testing the Bit Error Ratio BER according to claim 1,
    **characterized in that**
    the likelihood distribution PD(NE,ni) is the Poisson distribution.

3.  Method for testing the Bit Error Ratio BER according to claim 1 or 2,
    **characterized in that**
    for avoiding a undefined situation for ne=0 starting the test with an artificial error ne=1 not incrementing ne then a first error occurs.

4.  Method for testing the Bit Error Ratio BER of a device against a maximal allowable Bit Error Ratio $BER_{limit}$ with an early fail criterion, whereby the early fail criterion is allowed to be wrong only by a small probability $D_2$, with the following steps

    - measuring ns bits of the output of the device, thereby detecting ne erroneous bits of these ns bits,
    - assuming that the likelihood distribution giving the distribution of the number of erroneous bits ni in a fixed number of samples of bits is PD(NE,ni), wherein NE is the average number of erroneous bits, obtaining $PD_{low}$ from the

$$D_2 \quad = \int_{ne}^{\infty} PD_{low}(NE_{low}, ni) dni$$

wherein $PD_{low}$ is the best possible likelihood distribution containing the measured ne erroneous bits with the probability $D_2$,

- obtaining the average number of erroneous bits $NE_{low}$ for the best possible likelihood distribution $PD_{low}$,
- comparing $NE_{low}$ with $NE_{limit} = BER_{limit} \cdot$ ns,
- if $NE_{limit}$ is smaller than $NE_{low}$ stopping the test and deciding that the device has early failed the test and
- if $NE_{limit}$ is higher than $NE_{low}$ continuing the test whereby increasing ns.

5.  Method for testing the Bit Error Ratio BER according to claim 4,
    **characterized in that**
    the likelihood distribution PD(NE,ni) is the Poisson distribution.

6.  Method for testing the Bit Error Ratio BER according to claim 4 or 5,

**characterized in that**

for avoiding a undefined situation for ne<k, wherein k is a small number of errors, not stopping the test as long as ne is smaller than k.

7. Method for testing the Bit Error Ratio BER according to claim 6,
**characterized in that**
k is 7.

8. Method for testing the Bit Error Ratio BER according to any of claims 4 to 7,
**characterized by**
an additional early pass criterion, whereby the early pass criterion is allowed to be wrong only by a small probability $D_1$, with the following additional steps

- assuming that the likelihood distribution giving the distribution of the number of erroneous bits ni in a fixed number of samples of bits is PD(NE,ni), wherein NE is the average number of erroneous bits, obtaining $PD_{high}$ from

$$D_1 \quad = \quad \int_0^{ne} PD_{high}(NE_{high}, ni) dni$$

wherein $PD_{high}$ is the worst possible likelihood distribution containing the measured ne erroneous bits with the probability $D_1$,

- obtaining the average number of erroneous bits $NE_{high}$ for the worst possible likelihood distribution $PD_{high}$,
- comparing $NE_{high}$ with $NE_{limit} = BER_{limit} \cdot ns$,
- if $NE_{limit}$ is higher than $NE_{high}$ stopping the test and deciding that the device has early passed the test and
- if $NE_{limit}$ is smaller than $NE_{high}$ continuing the test, whereby increasing ns.

9. Method for testing the Bit Error Ratio BER according to claim 8,
**characterized in that**
for avoiding a undefined situation for ne=0 starting the test with an artificial error ne=1 not incrementing ne then a first error occurs.

10. Method for testing the Bit Error Ratio BER according to claim 8 or 9,
**characterized in that**
the probability $D_1$ for the wrong early pass criterion and the probability $D_2$ for the wrong early fail criterion are equal $(D_1=D_2)$.

Fig. 1

Fig. 2

BER limit = 0.2 (1/5)   Actual BER = 0.25 (1/4)

| Number of sample, | 1 | 2 | 3 | 4 | 5 | 6 | 7 | 8 | 9 | 10 etc... |
|---|---|---|---|---|---|---|---|---|---|---|
| Sequence, 0: correct, 1: error | 0 | 1 | 0 | 0 | 0 | 1 | 0 | 0 | 0 | 1 |
| BER | | 1/2 | 1/3 | 1/4 | 1/5 | 2/6 | 2/7 | 2/8 | 2/9 | 3/10 |
| BER norm | | 5/2 | 5/3 | 5/4 | 5/5 | 10/6 | 10/7 | 10/8 | 10/9 | 15/10 |

Fig. 3

European Patent Office

**EUROPEAN SEARCH REPORT**

Application Number

EP 01 11 0327

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 606 563 A (LEE CHRIS E ET AL) 25 February 1997 (1997-02-25) * abstract * * column 1, line 41 - line 56 * * column 2, line 31 - column 3, line 16 * * column 3, line 31 - line 54 * * figures 1,2 * | 1,4 | H04L1/24 H04B17/00 |
| A | EP 0 954 117 A (ICO SERVICES LTD) 3 November 1999 (1999-11-03) * abstract * * column 3, line 27 - column 4, line 19 * * column 10, line 11 - line 40 * * figure 7 * | 1,4 | |
| | | | TECHNICAL FIELDS SEARCHED (Int.Cl.7) |
| | | | H04L H04B |

The present search report has been drawn up for all claims

| Place of search | Date of completion of the search | Examiner |
|---|---|---|
| THE HAGUE | 18 October 2001 | López Márquez, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 11 0327

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2001

| Patent document cited in search report | | Publication date | Patent family member(s) | | Publication date |
|---|---|---|---|---|---|
| US 5606563 | A | 25-02-1997 | CA | 2159763 A1 | 19-11-1996 |
| EP 0954117 | A | 03-11-1999 | EP | 0954117 A1 | 03-11-1999 |
| | | | JP | 2000059862 A | 25-02-2000 |

EPO FORM P0459

For more details about this annex : see Official Journal of the European Patent Office, No. 12/82